# EUROPÄISCHE PATENTSCHRIFT

(11) **EP 3 380 316 B1**
(45) Veröffentlichungstag und Bekanntmachung des Hinweises auf die Patenterteilung: **22.07.2020**
(21) Anmeldenummer: 16788708.2
(22) Anmeldetag: 02.11.2016
(51) Int. Cl.: B32B 5/02, B32B 5/18, B32B 5/24, B32B 7/12, B32B 9/02, B32B 9/04, B32B 27/08, B32B 27/30, B32B 27/40, B32B 3/26, B60N 2/00

(54) **VERFAHREN ZUR HERSTELLUNG EINES VERBUNDMATERIALS UND VERBUNDMATERIAL**
METHOD FOR PRODUCING A COMPOSITE MATERIAL AND COMPOSITE MATERIAL
PROCÉDÉ DE FABRICATION D'UN MATÉRIAU COMPOSITE ET MATÉRIAU COMPOSITE

(30) Priorität: 27.11.2015 AT 510192015
(43) Veröffentlichungstag der Anmeldung: 03.10.2018
(73) Patentinhaber: Konrad Hornschuch AG, 74679 Weissbach (DE)
(72) Erfinder: PHILIPP, Schaefer, 30175 Hannover (DE); KAMMERER, Birgit, 74635 Kupferzell (DE)
(74) Vertreter: Preusser, Andrea
(86) Internationale Anmeldenummer: PCT/EP2016/076338
(87) Internationale Veröffentlichungsnummer: WO 2017/089081

(56) Entgegenhaltungen:
- EP-A1- 0 802 064
- WO-A2-00/46045
- US-A1- 2006 024 476

## Beschreibung

Die Erfindung betrifft ein Verfahren zur Herstellung eines Verbundmaterials gemäß dem Oberbegriff des Patentanspruchs 1. Des weiteren betrifft die Erfindung ein Verbundmaterial sowie Gegenstände, insbesondere Formatzuschnitte, die aus diesem Verbundmaterial hergestellt bzw. zugeschnitten sind und insbesondere für Sitzbezüge bzw. Ausstattungsteile für Kraftfahrzeuge Einsatz finden.

Verbundmaterialien bzw. daraus hergestellte Formatzuschnitte, insbesondere wie sie für Kraftfahrzeuge, Schuhe, Krankenliegen hergestellt und eingesetzt werden, sollen eine ausreichende Durchlässigkeit für Luft und/oder Wasserdampf besitzen. Derzeit werden derartige Verbundmaterialien durch Stanzen oder durch Nadeln mit Ausnehmungen für den Durchtritt von Luft und/oder Wasserdampf versehen. Die Herstellung durch Stanzen ist aufwendig und die Ausbildung von kleinen Ausnehmungen bzw. Durchtrittsöffnungen ist schwierig. Die durch Nadeln hergestellten Durchtrittsöffnungen belassen das Trägermaterial im Gegensatz zum Stanzen unversehrt; die ausgebildeten Durchtrittsöffnungen haben jedoch die Tendenz, dass sie sich wieder schließen.

Beim Einsatz von heißen Nadeln, mit denen die aus Kunststoff bestehende Oberschicht des Verbundmaterials bleibend perforiert wird, bilden sich an den Rändern Verkrustungen, sodass die Oberfläche des Verbundmaterials rau und damit seine Haptik beeinträchtigt wird.

Des weiteren lässt sich mit den zur Ausbildung von Durchtrittsöffnungen eingesetzten Stanzen bzw. Nadelwalzen immer nur die gleiche stereotype Anordnung und Form der Durchtrittsöffnungen herstellen. Eine Variation bzw. eine Ausbildung eines Musters oder unterschiedlich tiefer Perforierungen ist nicht möglich. Es ergibt sich immer das gleiche Bild und die gleiche Verteilung auf den in Bahnen oder Platten hergestellten Verbundmaterialien. Erst nachdem die Durchtrittsöffnungen bzw. Ausnehmungen ausgebildet sind, werden die Bahnen bzw. Platten in Formatzuschnitte geteilt bzw. zerschnitten.

Aus der WO 00/46045 A1 ist es bekannt, ein zweischichtiges Verbundmaterial durch punktuellen Laserabtrag der oberen Schicht zu dekorieren, wodurch sich beispielsweise unterschiedliche Farben im Verbundmaterial erzeugen lassen. Eine ähnliche Modifikation in einem drei Schichten umfassenden Verbundmaterial ist Gegenstand der EP 0 802 064 A1.

Aus der US 2006/0024476 A1 ist es bekannt, durch Laserstrahlen Nähte und ähnliche Dekorelemente in einem Verbundmaterial nachzuahmen.

Aufgabe der Erfindung ist es, ein atmungsaktives und hoch belastbares, insbesondere abriebfestes Verbundmaterial vorzuschlagen. Die Erfindung betrifft ein Verfahren zur Herstellung eines Verbundmaterials wie in Anspruch 1 definiert, und ein Verbundmaterial wie in Anspruch 14 definiert. Übrige Ausführungsformen sind in den abhängigen Ansprüchen definiert.

Als Material zur Erstellung des Verbundmaterials wird eine zumindest zweischichtige Oberschicht aus Polyurethan oder Weich-PVC mit einer Trägerschicht verbunden. Ein derartiges Verbundmaterial kann z.B. auch ein handelsübliches bzw. bekanntes Kunstleder sein, das als Bahnenware zur Verfügung steht, die zu Formatzuschnitten verarbeitet wird. Die Zusammensetzung des für die Oberschicht eingesetzten Polyurethans bzw. PVCs kann je nach Anwendungszweck variieren. Gleiches gilt auch für die Trägerschicht, für die eine Vielzahl von Materialien zur Verfügung steht.

Die Herstellung des Verbundmaterials bzw. des Verbundes von Oberschicht und Trägerschicht bzw. eines Kunstleders erfolgt in an sich bekannter Weise. Allenfalls wird die auf einem Releasepapier hergestellte Oberschicht direkt mit der Trägerschicht verbunden oder es wird eine gegebenenfalls geschäumte Mittelschicht aus Weich-PVC oder gegebenenfalls geschäumten Polyurethan eingesetzt, um die Oberschicht und die Trägerschicht zu verbinden. Die Mittelschicht kann auch ein Prepolymer oder ein PU-high-solid sein, welche in situ aushärten. Es ist auch möglich, den Träger auf die noch nicht vollständig ausreagierte oder mit einer Kaschierpaste versehene Oberschicht aufzulegen und durch den Druck des Gewichtes der Trägerschicht miteinander zu verbinden.

Um die Nachteile der bisher mit Ausnehmungen bzw. Durchtrittsöffnungen für Luft und/oder Wasserdampf versehenen Verbundmaterialien zu beseitigen, ist erfindungsgemäß vorgesehen, dass die Ausnehmungen und Durchtrittsöffnungen mit einem Laser hergestellt werden bzw. das zur Ausbildung der Ausnehmungen erforderliche Material durch Laserabtragung beseitigt wird. Durch die Laser-Abtragung mit Hilfe eines Lasers kann die Lage und Tiefe der Ausnehmungen exakt vorgenommen werden.

Vorteilhaft kann, insbesondere bei unebener oder genarbter oder geprägter Oberfläche, vorgesehen sein, dass zumindest 50% der ausgebildeten Ausnehmungen die Oberschicht durchdringen und zumindest bis zur Trägerschicht reichen.

Für die Haltbarkeit und Festigkeit ist es erfindungsgemäß vorgesehen, dass die Oberschicht aneinander anliegende bzw. aufeinanderfolgende Weich-PVC-Schichten oder Polyurethan-Schichten umfasst, wobei die einzelnen Schichten der Oberschicht bei der Ausbildung der Ausnehmungen im Umgangsbereich der Ausnehmungen mit dem Laser miteinander verbunden bzw. verschweißt werden.

Gute Festigkeits- und Gebrauchseigenschaften ergeben sich, wenn das Verbundmaterial mit einer Dicke von 1,0 bis 1,4 mm erstellt wird und/oder wenn die Oberschicht und die Mittelschicht mit einer gemeinsamen Gesamtstärke von 0,080 bis 0,950 mm, vorzugsweise mit einer Gesamtstärke von 0,010 bis 0,750 mm, ausgebildet werden.

Die Anordnung und die Kontur der Ausnehmungen kann im Rahmen der Steuerung des Lasers in weiten Grenzen variiert werden. Die Gestaltungsmöglichkeiten werden erhöht, wenn der Oberschicht und/oder den einzelnen Schichten der Oberschicht und/oder der Mittelschicht farblich unterschiedliche Pigmente zugesetzt werden.

Für die Herstellung des Verbundmaterials ist es vorteilhaft, wenn die Oberschicht in Form zumindest einer Schicht aus Weich-PVC oder zumindest einer Schicht aus Polyurethan, insbesondere aus einer vernetzten und verfestigten Polyurethandispersion, erstellt wird und/oder wenn zwischen die Oberschicht und die Trägerschicht zu ihrer Verbindung eine Mittelschicht aus gegebenenfalls geschäumten, Weich-PVC oder aus, gegebenenfalls geschäumten Polyurethan eingebracht wird und/oder wenn bei der Verbindung von Oberschicht und Trägerschicht die Mittelschicht teilweise in die Trägerschicht eingebracht bzw. eingedrückt wird und/oder wenn die Oberschicht mit einer Klebeschicht mit der Trägerschicht verbunden wird und/oder wenn die Oberschicht Hafteigenschaften besitzt und auf die Trägerschicht aufgebracht und mit dieser verbunden wird.

Bevorzugt kann vorgesehen werden, dass die Ausnehmungen im Querschnitt rund, elliptisch, stäbchenförmig oder sternförmig ausgebildet werden.

Für die Festigkeit des Materials und für ausreichenden Luft- und Wasserdampfdurchtritt ist es von Vorteil, wenn die Ausnehmungen mit einer größten Abmessung in der Oberfläche der Oberschicht von 40 µm bis 2,0 mm, vorzugsweise 80 µm bis 0,90 mm, ausgebildet werden und/oder wenn pro Flächeneinheit, beispielsweise pro cm², maximal 35%, vorzugsweise maximal 28%, der Flächeneinheit mit Ausnehmungen versehen werden. Damit wird die Festigkeit des Verbundmaterials nicht beeinträchtigt.

Dabei wird derart vorgegangen, dass die Auswahl und die Abmessungen der Ausnehmungen derart bemessen werden, dass die Wasserdampfdurchlässigkeit des Verbundmaterials nach DIN EN ISO 14268 größer als 1,2 mg/cm²h ist.

Für die Praxis bzw. Verarbeitung ist es von Vorteil, wenn der Verbund von Oberschicht und Trägerschicht in Form von Bahnen oder Platten hergestellt bzw. ausgebildet wird und wenn nachdem die Bahnen oder Platten in Zuschnitte gewünschter Form und Abmessung geteilt wurden, in den Verbundmaterialzuschnitten bzw. Formatteilen die Ausnehmungen durch Laserbearbeitung ausgebildet werden.

Es ist möglich, eine Farbgestaltung der Formatzuschnitte zu erreichen, wenn zusätzlich zu den die Oberschicht durchdringenden Ausnehmungen zusätzliche Ausnehmungen in der Oberschicht ausgebildet werden, welche die Oberschicht nicht durchdringen, sondern in der unterhalb der obersten Schicht der Oberschicht liegenden Schicht enden. Wenn die einzelnen Schichten der Oberschicht unterschiedliche Farbe aufweisende Farbpigmente enthalten können, entsteht ein mehrfarbiges Muster.

Die erfindungsgemäße Vorgangsweise ermöglicht eine besonders wirtschaftliche Herstellung von Gegenständen, die zumindest teilweise unter Verwendung eines erfindungsgemäßen Verbundmaterials hergestellt werden können. Das erfindungsgemäße Verbundmaterial wird nach seiner Herstellung, d.h. Herstellung des Verbundes von Oberschicht und Trägerschicht, in Formatzuschnitte, das heißt Zuschnitte gewünschter Abmessungen geteilt und diese Stücke werden der Laserbearbeitung unterzogen bzw. wird erst in diesen Zuschnitten die erforderliche Anzahl von Ausnehmungen hergestellt. Es muss somit nicht, wie bisher mit einer stereotyp wiederkehrenden bzw. regelmäßigen Anordnung der Ausnehmungen Vorlieb genommen werden; die Ausnehmungen können mittels eines handelsüblichen mit einer entsprechenden Steuereinheit versehenen Lasers in nahezu beliebiger Form und Anordnung hergestellt werden. Die Anordnung der Ausnehmungen kann dem jeweiligen Verwendungszweck angepasst werden. Vor allem besitzen die mittels Laser hergestellten Ausnehmungen den Vorteil, dass die Ausnehmungen nicht wieder zugehen, wie dies bei mit Nadeln hergestellten Ausnehmungen der Fall ist, da mit dem Laser die erforderliche Materialmenge abgetragen worden ist. Des weiteren sind die laserbehandelten Flächen glatt, sodass die Schmutzempfindlichkeit des Materials herabgesetzt ist. Es ist auch vorteilhaft, auf die Oberschicht nach dem Lasern noch eine dünne Finish-Schicht aufzubringen, beispielsweise eine PVC- oder PU-Schicht, die dünner als 0,010 mm ist.

Es ist beispielsweise möglich, pro cm² eines Formatzuschnittes 20 Ausnehmungen mit einem Durchmesser von 0,4 mm anzuordnen, von denen 60% die Oberschicht durchdringen. Mit einer derartigen Ausbildung ergibt sich eine Wasserdampfdurchlässigkeit nach DIN EN ISO 14268 von 1,2 mg/cm²h. Damit wird der von der Autoindustrie vorgegebene Grenzwert von 1 mg/cm²h überschritten.

Bei einer Anwendung von Formatzuschnitten für Autositze kann z.B. auch vorgesehen sein, dass 48 Ausnehmungen pro cm² ausgebildet werden, die jeweils einen Durchmesser von 0,1 mm besitzen. Wenn wiederum 60% der Ausnehmungen die Oberschicht bis in den polymerfreien Raum der Trägerschicht durchdringen, ergibt sich eine Wasserdampfdurchlässigkeit von 2,1 mg/cm²h.

Bei einer Ausbildung von 64 Ausnehmungen/cm² mit einem Durchmesser von 0,020 mm bis 0,080 mm in einem Formatzuschnitt mit einer Verteilung von etwa 1:1 und einer die Oberschicht durchdringenden Zahl der Ausnehmungen von 60% ergibt sich eine Wasserdampfdurchlässigkeit von 1 ,7 mg/cm²h.

Für eine Sitzfläche, insbesondere für eine Mittelbahn, eines Autositzes in einer Abmessung von 40x40 cm, werden etwa 6 Ausnehmungen/cm² ausgebildet. Damit ergibt sich bei einer entsprechenden Größe der jeweiligen Ausnehmungen ohne weiteres und ohne ungünstige Beeinflussung der Festigkeit des Verbundmaterials eine ausreichend große Luft- und Wasserdampfdurchlässigkeit.

Die Wasserdampfdurchlässigkeit wird vorwiegend durch die Oberschicht bestimmt, da die eingesetzten Trägerschichten hohe Luft- und/oder Wasserdampfdurchlässigkeit besitzen, die Oberschicht jedoch für Luft und Wasserdampf undurchlässig ist.

Die erfindungsgemäß aus dem Verbundmaterial ausgeformten Formatzuschnitte besitzen nach dem Lasern die gleiche Zugfestigkeit und Bruchdehnung und die gleiche Biegesteifigkeit wie das Material vor dem Lasern, weil im Gegensatz zum Nadeln und/oder Perforieren der Träger nicht geschwächt wird

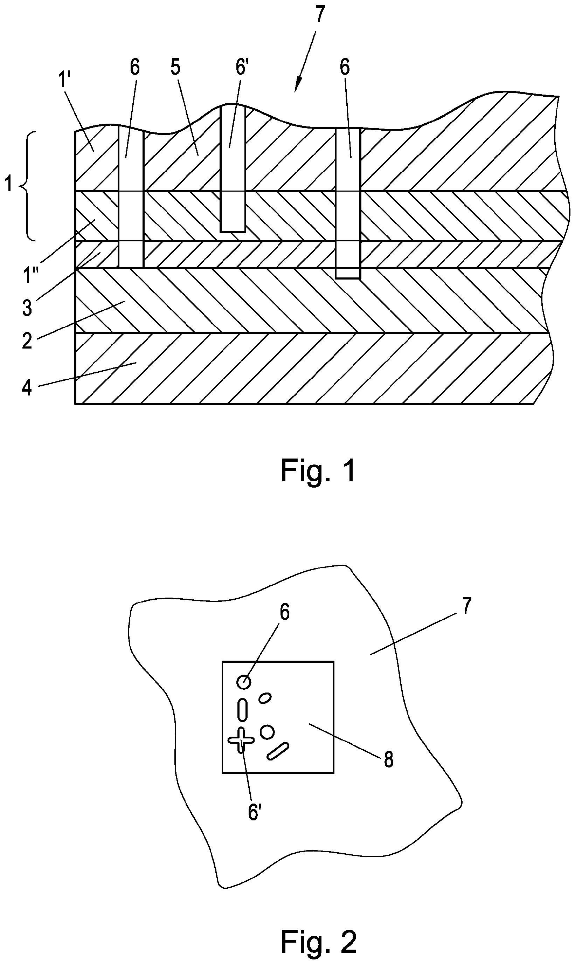

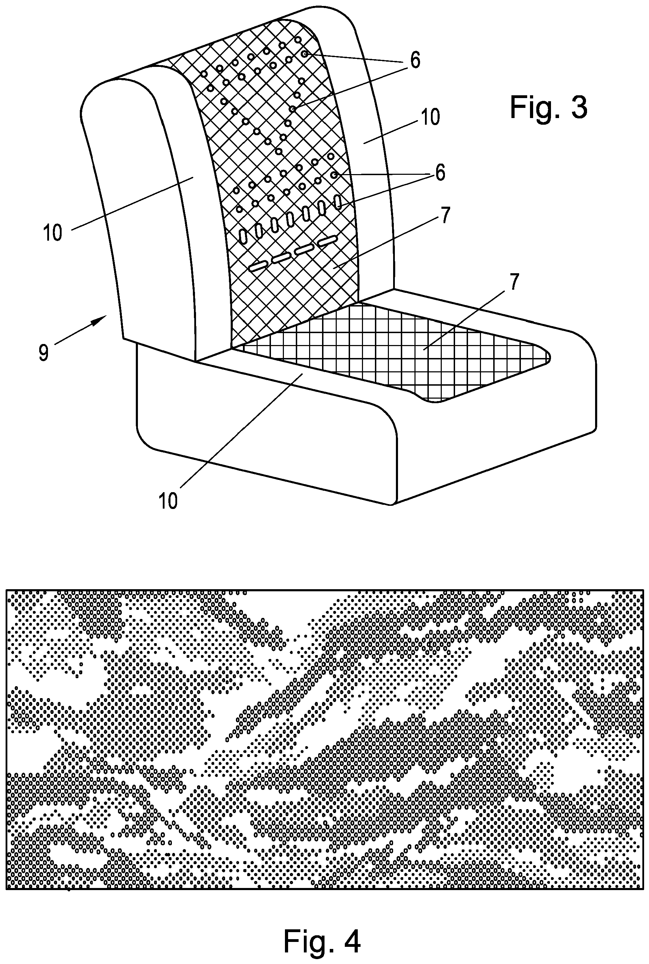

Fig. 1 zeigt schematisch einen Querschnitt durch einen erfindungsgemäßen Formatzuschnitt. Fig. 2 zeigt eine Detailansicht. Fig. 3 zeigt den Einsatz eines Formatzuschnittes bei einem Autositz. Fig. 4 zeigt eine Draufsicht auf einen mit Ausnehmungen unterschiedlicher Abmessungen versehenen Formatzuschnitt.

Fig. 1 zeigt einen schematischen Schnitt durch einen Formatzuschnitt 7, der eine Oberschicht 1 aus Weich-PVC oder aus Polyurethan aufweist, die mit einer Trägerschicht 2 verbunden ist. Die Verbindung dieser Schichten 1 und 2 kann entweder direkt erfolgen oder, wie in Fig. 1 dargestellt, über eine Mittelschicht 3. Die Trägerschicht 2 kann mit einer volumenbringenden bzw. voluminösen weiteren Schicht 4 verbunden sein. Die Oberschicht 1 umfasst, wie dargestellt, eine Mehrzahl von Schichten; dargestellt sind zwei Schichten 1', 1".

Die Schichten 1', 1", 2 und/oder 3 können unterschiedliche Farbe besitzen bzw. mit unterschiedlichen Farbpigmenten dotiert sein. Es kann vorgesehen sein, dass die außengelegene Schicht 1' der Oberschicht 1 kompakt ist und zumindest eine Schicht aus Weich-PVC ist und dass die innen gelegene Schicht 1" der Oberschicht 1 zumindest eine Schicht aus geschäumten Weich-PVC ist oder dass die außen gelegene Schicht 1' der Oberschicht 1 kompakt ist und zumindest eine Schicht aus Polyurethan, insbesondere eine Schicht aus einer vernetzten und verfestigten Polyurethandispersion, ist und dass die innen gelegene Schicht 1" der Oberschicht 1 zumindest eine Schicht aus geschäumten Polyurethan ist.

Von der Oberfläche der Oberschicht 1 her sind Ausnehmungen 6 in die Oberschicht 1 eingebracht. Dazu wird mit einem Laser die entsprechende Menge Material der Oberschicht 1 und der gegebenenfalls vorhandenen Mittelschicht 3 abgetragen. Die Eindringtiefe wird durch die Laserenergie vorgegeben. Für eine vorgegebene Laserenergie, ergibt sich eine bestimmte Eindringtiefe. Im Bereich von Erhebungen 5, wie sie z.B. bei einer genarbten oder geprägten Oberschicht 1 vorliegen, wird eine Anzahl von Ausnehmungen 6' die Oberschicht 1 allenfalls nicht durchdringen bzw. nur in die Mittelschicht 3 reichen. Derartige Ausnehmungen 6' können aber zur Ausbildung eines Musters dienen, insbesondere wenn die Farbe der Schicht 1" anders ist als die Farbe der Schicht 1'. Es sollte jedoch vorgesehen sein, dass die Anzahl der die Oberschicht 1 durchdringenden Ausnehmungen 6 zumindest 50% aller hergestellten Ausnehmungen beträgt.

Insbesondere wenn die Oberfläche der Oberschicht 1 eben ist, kann der Laser gesteuert werden, dass er neben der Anzahl der gewünschten, die Oberschicht 1 durchdringenden Ausnehmungen 6 noch zusätzliche Ausnehmungen 6' zur Ausbildung eines gegebenenfalls färbigen Musters vornimmt.

Fig. 2 zeigt schematisch unterschiedliche Gestaltungsmöglichkeiten der Ausnehmungen 6 bzw. 6'. Die Ausnehmungen 6, 6' können im Querschnitt die verschiedensten mit dem Laser ausbildbaren geometrischen Formen besitzen, die gegebenenfalls in Zonen angeordnet sein können.

Des weiterem ist in Fig. 2 eine Flächeneinheit 8 eines Formatzuschnittes 7 angedeutet, innerhalb der eine bestimmte Anzahl von Ausnehmungen 6 nicht überschritten werden soll. Die Anzahl der Ausnehmungen 6 pro Flächeneinheit 8 soll derart gewählt werden, dass nicht mehr als 35% der Fläche der Flächeneinheit von den Ausnehmungen 6 beansprucht werden.

Fig. 3 zeigt einen Autositz, der mit einem Formatzuschnitt 7 zugeschnitten aus einem Verbundmaterial erstellt wurde, wobei der Formatzuschnitt mit Ausnehmungen 6 in der erfindungsgemäßen Weise versehen wurde. Die Abmessungen der dargestellten Ausnehmungen 6 sind nicht maßstabsgetreu sondern nur illustrativ. Derartige Formatzuschnitte 7 werden laserbearbeitet, nachdem sie in die vorgegebene Form aus dem Verbundmaterial von Oberschicht 1 und Trägerschicht 2 zugeschnitten wurden. Diese mit den Ausnehmungen 6 versehenen Formatzuschnitte 7 werden sodann mit anderen Materialien 10, z.B. Stoffen oder Kunstleder, welche zumeist keine Ausnehmungen 6 besitzen und beispielsweise in den Seitenbereichen des Autositzes zur Anwendung kommen bzw. eingebaut werden, verbunden, z.B. zusammengenäht oder verklebt werden.

Fig. 4 zeigt eine Draufsicht einer mit Ausnehmungen 6 versehene Oberfläche eines Formatzuschnittes 7. Die Ausnehmungen 6 besitzen unterschiedliche Abmessungen und sind unregelmäßig verteilt bzw. zu Gruppen zusammengefasst, derart, dass eine Art Fladenmuster entsteht.

Die Ausnehmungen 6 bzw. 6' können verschiedene geometrische Formen besitzen. Sie können einer Oberflächenstruktur folgen oder als Bild angeordnet sein. Bei der bildartigen Anordnung gemäß Fig. 4 sind Zonen mit Ausnehmungen 6 von unterschiedlichen Durchmessern und auch kleine Zonen, in denen keine Ausnehmungen 6 und/oder 6' angeordnet sind, vorhanden.

Das Lasern erfolgt auf einer handelsüblichen Lasergravuranlage. Die Absaugung der Dämpfe, z.B. Salzsäure bei PVC, erfolgt unmittelbar da, wo sie entstehen; die Dämpfe werden in einen Wasserbehälter geführt und neutralisiert.

Für den Aufbau des Verbundmaterials ist es vorteilhaft, wenn die größte Abmessung der Ausnehmungen in der Oberfläche der Oberschicht 1 40 µm bis 2,0 mm, vorzugsweise 80 µm bis 0,90 mm, beträgt und/oder wenn pro Flächeneinheit, z.B. pro cm², maximal 35%, vorzugsweise maximal 28%, der Fläche dieser Flächeneinheit von Ausnehmungen 6 eingenommen sind. Damit wird erfindungsgemäß erreicht, das die Wasserdampfdurchlässigkeit des Verbundmaterials nach DIN EN ISO 14268 größer als 1 ,2 mg/cm²h ist.

Durch Auswahl der Ausnehmungen 6 und ihres Durchmessers kann die Luft- und/oder Wasserdampfdurchlässigkeit über die Oberfläche eines Formatzuschnittes 7 einfach auf gewünschte Werte eingestellt werden ohne die Materialfestigkeit zu beeinträchtigen.

Die Oberschicht 1 ist vorteilhafterweise aus zwei Schichten 1', 1" aufgebaut. Die Schichten 1', 1" können mehrschichtig aus dem jeweiligen Material aufgebaut sein.

## Patentansprüche

1. Verfahren zur Herstellung eines Verbundmaterials, wozu eine Trägerschicht (2) mit einer Oberschicht (1) aus Polyurethan oder Weich-PVC verbunden wird und die Trägerschicht (2) ein textiles Material, z.B. Gewebe, Gewirke oder Microfaservlies, oder ein Leder, insbesondere ein Rindspaltleder, ist, und die Oberschicht (1) eine Anzahl von miteinander verbundenen Polyurethan-Schichten oder von Weich-PVC-Schichten (1', 1") umfasst, wobei
- in dem Verbund von Oberschicht (1) und Trägerschicht (2) von der Oberfläche der Oberschicht (1) ausgehend kanalförmige Ausnehmungen (6) zum Durchtritt von Wasserdampf und/oder Luft durch Materialabtragung mit einem Laser derart ausgebildet werden und
- zumindest ein Teil der Ausnehmungen (6) das Material der Oberschicht (1) durchdringt und/oder vor Eintritt in den vom Material der Oberschicht (1) freien Volumenbereich der Trägerschicht (2) endet, **dadurch gekennzeichnet, dass** die Oberschicht (1) aneinander anliegende bzw. aufeinanderfolgende Schichten aus Weich-PVC oder Polyurethan-Schichten (1', 1") umfasst und dass die einzelnen Schichten (1', 1") der Oberschicht (1) bei der Ausbildung der Ausnehmungen (6) im Umgangsbereich (9) der Ausnehmungen (6) mit dem Laser miteinander verbunden bzw. verschweißt werden..

2. Verfahren nach Anspruch 1, **dadurch gekennzeichnet, dass** zumindest 50% der ausgebildeten Ausnehmungen (6) die Oberschicht (1) durchdringen und zumindest bis zur Trägerschicht (2) reichen.

3. Verfahren nach einem der Ansprüche 1 oder 2, **dadurch gekennzeichnet, dass** zwischen die Oberschicht (1) und die Trägerschicht (2) zu ihrer Verbindung eine Mittelschicht (3) aus gegebenenfalls geschäumten Weich-PVC oder aus, gegebenenfalls geschäumten Polyurethan eingebracht wird.

4. Verfahren nach einem der Ansprüche 1 bis 3, **dadurch gekennzeichnet, dass** das Verbundmaterial (7) mit einer Dicke von 1,0 bis 1,4 mm erstellt wird und/oder dass die Oberschicht (1) und die Mittelschicht (3) mit einer gemeinsamen Gesamtstärke von 0,080 bis 0,950 mm, vorzugsweise mit einer Gesamtstärke von 0,010 bis 0,750 mm, ausgebildet werden.

5. Verfahren nach einem der Ansprüche 1 bis 4, **dadurch gekennzeichnet, dass** die Oberschicht (1) aus einer vernetzten und verfestigten Polyurethandispersion erstellt wird.

6. Verfahren nach einem der Ansprüche 1 bis 5, **dadurch gekennzeichnet, dass** der Oberschicht (1) und/oder den einzelnen Schichten (1', 1") der Oberschicht (1) und/oder der Mittelschicht (3) farblich unterschiedliche Pigmente zugesetzt werden.

7. Verfahren nach einem der Ansprüche 1 bis 6, **dadurch gekennzeichnet, dass** bei der Verbindung von Oberschicht (1) und Trägerschicht (2) die Mittelschicht (3) teilweise in die Trägerschicht (2) eingebracht bzw. eingedrückt wird oder dass die Oberschicht (1) mit einer Klebeschicht mit der Trägerschicht (2) verbunden wird oder dass die Oberschicht (1) Hafteigenschaften besitzt und auf die Trägerschicht (2) aufgebracht und mit dieser verbunden wird.

8. Verfahren nach einem der Ansprüche 1 bis 7, **dadurch gekennzeichnet, dass** die Ausnehmungen (6) im Querschnitt rund, elliptisch, stäbchenförmig oder sternförmig ausgebildet werden.

9. Verfahren nach einem der Ansprüche 1 bis 8, **dadurch gekennzeichnet, dass** die Ausnehmungen (6) mit einer größten Abmessung in der Oberfläche der Oberschicht (1) von 40 µm bis 2,0 mm, vorzugsweise 80 µm bis 0,90 mm, ausgebildet werden.

10. Verfahren nach einem der Ansprüche 1 bis 9, **dadurch gekennzeichnet, dass** pro Flächeneinheit (8), beispielsweise pro cm², maximal 35%, vorzugsweise maximal 28%, der Flächeneinheit (8) mit Ausnehmungen (6) versehen werden.

11. Verfahren nach einem der Ansprüche 1 bis 10, **dadurch gekennzeichnet, dass** die Auswahl und die Abmessungen der Ausnehmungen (6) derart bemessen werden, dass die Wasserdampfdurchlässigkeit des Verbundmaterials (7) nach DIN EN ISO 14268 größer als 1,2 mg/cm²h ist.

12. Verfahren nach einem der Ansprüche 1 bis 11, **dadurch gekennzeichnet, dass** die Trägerschicht (2) mit einer volumenbringenden Basisschicht (4), z.B. einer Vliesschicht, verbunden wird.

13. Verfahren nach einem der Ansprüche 1 bis 12, **dadurch gekennzeichnet, dass** der Verbund von Oberschicht (1) und Trägerschicht (2) in Form von Bahnen oder Platten hergestellt bzw. ausgebildet wird und dass nachdem die Bahnen oder Platten in Formatzuschnitte bzw. Zuschnitte gewünschter Form und Abmessung geteilt wurden, in den Verbundmaterialzuschnitten die Ausnehmungen (6) durch Laserbearbeitung ausgebildet werden.

14. Verbundmaterial umfassend eine Trägerschicht (2), die mit einer Oberschicht (1) aus Polyurethan oder Weich-PVC verbunden ist, wobei die Trägerschicht (2) ein textiles Material, z.B. Gewebe, Gewirke oder Micorfaservlies, oder ein Leder, insbesondere ein Rindspaltleder, ist, und die Oberschicht (1) eine Anzahl von miteinander verbundenen Schichten (1', 1") aus Weich-PVC oder aus Polyurethan umfasst, insbesondere hergestellt nach einem Verfahren der Ansprüche 1 bis 13, wobei
- im Verbundmaterial (7) ausgehend von der Oberfläche der Oberschicht (1) kanalförmige Ausnehmungen (6) zum Durchtritt von Wasserdampf und/oder Luft mit einem Laser hergestellt sind bzw. ausgebildet sind, und
- zumindest ein Teil der Ausnehmungen (6) das Material der Oberschicht (1) durchdringt und/oder vor Eintritt in den vom Material der Oberschicht (1) freien Volumenbereich der Trägerschicht (2) endet, **dadurch gekennzeichnet, dass** aneinander anliegende bzw. aufeinanderfolgende Schichten (1', 1") aus Weich-PVC oder Schichten (1', 1") aus Polyurethan der Oberschicht (1) bei der Ausbildung der Ausnehmungen (6) im Umfangbereich (9) der Ausnehmungen (6) miteinander verbunden bzw. verschweißt werden.

15. Verbundmaterial nach Anspruch 14, **dadurch gekennzeichnet, dass** zumindest 50% der ausgebildeten Ausnehmungen (6) die Oberschicht (1) durchdringen und zumindest bis zur Trägerschicht (2) reichen.

16. Verbundmaterial nach einem der Ansprüche 14 oder 15, **dadurch gekennzeichnet, dass** die Dicke des Verbundmaterials (7) 1,0 bis 1,4 mm beträgt und/oder dass die Oberschicht (1) und die Mittelschicht (3) gemeinsam eine Stärke von 0,080 bis 0,950 mm, vorzugsweise mit einer Gesamtstärke von 0,010 bis 0,750 mm, besitzen.

17. Verbundmaterial nach einem der Ansprüche 14 bis 16, **dadurch gekennzeichnet,**
- **dass** die außengelegene Schicht (1') der Oberschicht (1) kompakt ist und zumindest eine Schicht aus Weich-PVC ist und dass die innen gelegene Schicht (1") der Oberschicht (1) zumindest eine Schicht aus geschäumten Weich-PVC ist oder
- **dass** die außen gelegene Schicht (1') der Oberschicht (1) kompakt ist und zumindest eine Schicht aus Polyurethan, insbesondere eine Schicht aus einer vernetzten und verfestigten Polyurethandispersion, ist und dass die innen gelegene Schicht (1") der Oberschicht (1) zumindest eine Schicht aus geschäumten Polyurethan ist.

18. Verbundmaterial nach einem der Ansprüche 14 bis 17, **dadurch gekennzeichnet, dass** zwischen der Oberschicht (1) und der Trägerschicht (2) eine Mittelschicht (3) aus gegebenenfalls geschäumten Weich-PVC oder aus gegebenenfalls geschäumten Polyurethan angeordnet ist.

19. Verbundmaterial nach einem der Ansprüche 14 bis 18, **dadurch gekennzeichnet, dass** die Mittelschicht (3) teilweise in die Trägerschicht (2) eingedrungen ist oder dass die Oberschicht (1) mit einer Klebeschicht mit der Trägerschicht (2) verbunden ist oder dass die Oberschicht (1) Hafteigenschaften besitzt und auf die Trägerschicht (2) aufgebracht und mit dieser verbunden ist.

20. Verbundmaterial nach einem der Ansprüche 14 bis 19, **dadurch gekennzeichnet, dass** die Oberschicht (1) und/oder die Mittelschicht (3) und/oder die Schichten (1', 1") der Oberschicht (1) gegebenenfalls farblich unterschiedliche Farbpigmente enthalten.

21. Verbundmaterial nach einem der Ansprüche 14 bis 20, **dadurch gekennzeichnet, dass** die Ausnehmungen (6, 6') im Querschnitt rund, elliptisch, stäbchenförmig oder sternförmig sind.

22. Verbundmaterial nach einem der Ansprüche 14 bis 21, **dadurch gekennzeichnet, dass** die größte Abmessung der Ausnehmungen (6, 6') in der Oberfläche der Oberschicht (1) 40 µm bis 2,0 mm, vorzugsweise 80 µm bis 0,90 mm, beträgt.

23. Verbundmaterial nach einem der Ansprüche 14 bis 22, **dadurch gekennzeichnet, dass** pro Flächeneinheit (8), z.B. pro cm², maximal 35%, vorzugsweise 28%, der Fläche dieser Flächeneinheit (8) von Ausnehmungen (6) eingenommen sind.

24. Verbundmaterial nach einem der Ansprüche 14 bis 23, **dadurch gekennzeichnet, dass** die Wasserdampfdurchlässigkeit des Verbundmaterials (7) nach DIN EN ISO 14268 größer als 1 ,2 mg/cm²h ist.

25. Verbundmaterial nach einem der Ansprüche 14 bis 24, **dadurch gekennzeichnet, dass** die Trägerschicht (2) mit einer volumenbringenden Basisschicht (4), z.B. einer Vliesschicht, verbunden ist.

26. Verbundmaterial nach einem der Ansprüche 14 bis 25, **dadurch gekennzeichnet, dass** das Verbundmaterial (7) in Form eines Formatzuschnittes vorliegt bzw. zugeschnitten oder geteilt ist.

27. Gegenstände zumindest teilweise hergestellt mit einem Formatzuschnitt aus Verbundmaterial nach einem der Ansprüche 14 bis 26, insbesondere Kfz-Sitzbezüge bzw. -polsterungen, Kfz-Kopfstützen, Schuhe und Liegeflächen.

28. Formatzuschnitt, hergestellt aus einem Verbundmaterial nach einem der Ansprüche 14 bis 26.

## Claims

1. Process for the production of a composite material, by bonding a supportive layer (2) to an upper layer (1) made of polyurethane or flexible PVC, where the supportive layer (2) is a textile material, e.g. woven fabric, knitted fabric or nonwoven microfibre fabric, or a leather, in particular a split cowhide leather, and the upper layer (1) comprises, bonded to one another, a number of polyurethane layers or a number of flexible PVC layers (1', 1"), where
- in the composite of upper layer (1) and supportive layer (2), proceeding from the surface of the upper layer (1), channel-shaped cavities (6) for the passage of water vapour and/or air are formed via ablation of material by a laser in the manner described and
- at least some of the cavities (6) penetrate the entire thickness of the material of the upper layer (1) and/or terminate before entry into that region of the volume of the supportive layer (2) that is free from the material of the upper layer (1), **characterized in that** the upper layer (1) comprises mutually adjoining/successive layers made of flexible PVC or polyurethane layers (1', 1") and that during the formation of the cavities (6) the individual layers (1', 1") of the upper layer (1) are bonded/fused to one another by the laser in the region (9) surrounding the cavities (6).

2. Process according to Claim 1, **characterized in that** at least 50% of the cavities (6) formed penetrate the entire thickness of the upper layer (1) and extend at least as far as the supportive layer (2).

3. Process according to either of Claims 1 and 2, **characterized in that** a middle layer (3) made of optionally foamed flexible PVC or of optionally foamed polyurethane is introduced between the upper layer (1) and the supportive layer (2) for bonding thereof.

4. Process as claimed in any of Claims 1 to 3, **characterized in that** the composite material (7) is produced with a thickness of from 1.0 to 1.4 mm and/or that the upper layer (1) and the middle layer (3) are formed with an overall total thickness of from 0.080 to 0.950 mm, preferably with a total thickness of from 0.010 to 0.750 mm.

5. Process according to any of Claims 1 to 4, **characterized in that** the upper layer (1) is produced from a crosslinked
and solidified polyurethane dispersion.

6. Process according to any of Claims 1 to 5, **characterized in that** pigments of different colours are added to the upper layer (1) and/or to the individual layers (1', 1") of the upper layer (1) and/or the middle layer (3).

7. Process according to any of Claims 1 to 6, **characterized in that** during the bonding of upper layer (1) and supportive layer (2), the middle layer (3) is to some extent introduced/pressed into the supportive layer (2), or that an adhesive layer is used to bond the upper layer (1) to the supportive layer (2), or that the upper layer (1) has adhesive properties and is applied to the supportive layer (2) and is bonded thereto.

8. Process according to any of Claims 1 to 7, **characterized in that** the cavities (6) are formed with a round, elliptical, rod-shaped or star-shaped cross section.

9. Process according to any of Claims 1 to 8, **characterized in that** the cavities (6) are formed with a largest dimension in the surface of the upper layer (1) of from 40 µm to 2.0 mm, preferably from 80 µm to 0.90 mm.

10. Process according to any of Claims 1 to 9, **characterized in that**, per unit (8) of area, for example per cm², cavities (6) are provided to at most 35%, preferably at most 28%, of the unit (8) of area.

11. Process according to any of Claims 1 to 10, **characterized in that** the selection and the dimensions of the cavities (6) are such that the water vapour transmission of the composite material (7) in accordance with DIN EN ISO 14268 is greater than 1.2 mg/cm²h.

12. Process according to any of Claims 1 to 11, **characterized in that** the supportive layer (2) is bonded to a voluminous base layer (4), e.g. a nonwoven layer.

13. Process according to any of Claims 1 to 12, **characterized in that** the composite of upper layer (1) and supportive layer (2) is produced/formed as webs or sheets, and that once the webs or sheets have been divided into cut-to-size sections of desired shape and dimension, the cavities (6) are formed by laser treatment in the cut-to-size sections of composite material.

14. Composite material comprising a supportive layer (2) bonded to an upper layer (1) made of polyurethane or flexible PVC, where the supportive layer (2) is a textile material, e.g. woven fabric, knitted fabric or nonwoven microfibre fabric, or a leather, in particular a split cowhide leather, and the upper layer (1) comprises, bonded to one another, a number of layers (1', 1") made of flexible PVC or made of polyurethane, in particular produced by a process of Claims 1 to 13, where
- in the composite material (7), proceeding from the surface of the upper layer (1), channel-shaped cavities (6) for the passage of water vapour and/or air are produced/formed by a laser, and
- at least some of the cavities (6) penetrate the entire thickness of the material of the upper layer (1) and/or terminate before entry into that region of the volume of the supportive layer (2) that is free from the material of the upper layer (1), **characterized in that** during the formation of the cavities (6), mutually adjoining/successive layers (1', 1") made of flexible PVC or layers (1', 1") made of polyurethane of the upper layer (1) are bonded/fused to one another in the region (9) surrounding the cavities (6).

15. Composite material according to Claim 14, **characterized in that** at least 50% of the cavities (6) formed penetrate the entire thickness of the upper layer (1) and extend at least as far as the supportive layer (2).

16. Composite material according to either of Claims 14 and 15, **characterized in that** the thickness of the composite material (7) is from 1.0 to 1.4 mm and/or that the overall thickness of the upper layer (1) and the middle layer (3) is from 0.080 to 0.950 mm, preferably from 0.010 to 0.750 mm.

17. Composite material according to any of Claims 14 to 16, **characterized**
- **in that** the externally situated layer (1') of the upper layer (1) is compact and is at least one layer made of flexible PVC, and that the internally situated layer (1'') of the upper layer (1) is at least one layer made of foamed flexible PVC, or
- **in that** the externally situated layer (1') of the upper layer (1) is compact and is at least one layer made of polyurethane, in particular one layer made of a crosslinked and solidified polyurethane dispersion, and that the internally situated layer (1") of the upper layer (1) is at least one layer made of foamed polyurethane.

18. Composite material according to any of Claims 14 to 17, **characterized in that** arranged between the upper layer (1) and the supportive layer (2) there is middle layer (3) made of optionally foamed flexible PVC or of optionally foamed polyurethane.

19. Composite material according to any of Claims 14 to 18, **characterized in that** the middle layer (3) has penetrated to some extent into the supportive layer (2), or that an adhesive layer has been used to bond the upper layer (1) to the supportive layer (2), or that the upper layer (1) has adhesive properties and has been applied to the supportive layer (2) and has been bonded thereto.

20. Composite material according to any of Claims 14 to 19, **characterized in that** the upper layer (1) and/or the middle layer (3) and/or the layers (1', 1") of the upper layer (1) optionally comprise pigments of different colours.

21. Composite material according to any of Claims 14 to 20, **characterized in that** the cross section of the cavities (6, 6') is rounded, elliptical, rod-shaped or star-shaped.

22. Composite material according to any of Claims 14 to 21, **characterized in that** the largest dimension of the cavities (6, 6') in the surface of the upper layer (1) is from 40 µm to 2.0 mm, preferably from 80 µm to 0.90 mm.

23. Composite material according to any of Claims 14 to 22, **characterized in that**, per unit (8) of area, e.g. per cm², at most 35%, preferably 28%, of the area of the said unit (8) of area is occupied by cavities (6) .

24. Composite material according to any of Claims 14 to 23, **characterized in that** the water vapour transmission of the composite material (7) in accordance with DIN EN ISO 14268 is greater than 1.2 mg/cm²h.

25. Composite material according to any of Claims 14 to 24, **characterized in that** the supportive layer (2) has been bonded to a voluminous base layer (4), e.g. a nonwoven layer.

26. Composite material according to any of Claims 14 to 25, **characterized in that** the composite material (7) takes the form of a cut-to-size section or has been cut to size or divided.

27. Articles at least to some extent produced with a cut-to-size section made of composite material according to any of Claims 14 to 26, in particular motor vehicle seat covers/cushioning, motor vehicle headrests, shoes and reclining areas.

28. Cut-to-size section produced from a composite material according to any of Claims 14 to 26.

## Revendications

1. Procédé pour la préparation d'un matériau composite, dans lequel une couche de support (2) est reliée à une couche supérieure (1) composée de polyuréthane ou de PVC souple et la couche de support (2) est un matériau textile, par exemple un tissu, une étoffe ou un non-tissé de microfibres, ou un cuir, en particulier un cuir bovin refendu et la couche supérieure (1) comprend un certain nombre de couches de polyuréthane reliées entre elles ou de couches de PVC souple (1', 1")
- dans le composite de couche supérieure (1) et de couche support (2), des évidements (6) en forme de canaux sont formés par enlèvement de matière avec un laser en partant de la surface de la couche supérieure (1), pour la pénétration de vapeur d'eau et/ou d'air et
- au moins une partie des évidements (6) pénètre le matériau de la couche supérieure (1) et/ou s'arrête avant l'entrée dans la zone de volume, exempte de matériau de la couche supérieure (1), de la couche de support (2), **caractérisé en ce que** la couche supérieure (1) comprend des couches juxtaposées ou successives de PVC souple ou des couches de polyuréthane (1', 1") et **en ce que** les couches individuelles (1', 1") de la couche supérieure (1), lors de la formation des évidements (6), sont reliées ou soudées entre elles par le laser dans la zone périphérique (9) des évidements (6).

2. Procédé selon la revendication 1, **caractérisé en ce qu'**au moins 50 % des évidements (6) formés pénètrent la couche supérieure (1) et arrivent au moins jusqu'à la couche de support (2).

3. Procédé selon l'une quelconque des revendications 1 et 2, **caractérisé en ce qu'**entre la couche supérieure (1) et la couche de support (2), une couche intermédiaire (3), composée de PVC souple éventuellement expansé ou composée de polyuréthane éventuellement expansé, est insérée pour leur liaison.

4. Procédé selon l'une quelconque des revendications 1 à 3, **caractérisé en ce que** le matériau composite (7) est produit avec une épaisseur de 1,0 à 1,4 mm et/ou **en ce que** la couche supérieure (1) et la couche intermédiaire (3) sont formées avec une épaisseur totale commune de 0,080 à 0,950 mm, de préférence avec une épaisseur totale de 0,010 à 0,750 mm.

5. Procédé selon l'une quelconque des revendications 1 à 4, **caractérisé en ce que** la couche supérieure (1) est produite à partir d'une dispersion de polyuréthane réticulé et consolidé.

6. Procédé selon l'une quelconque des revendications 1 à 5, **caractérisé en ce que** des pigments de différentes couleurs sont ajoutés à la couche supérieure (1) et/ou aux couches individuelles (1', 1") de la couche supérieure (1) et/ou à la couche intermédiaire (3).

7. Procédé selon l'une quelconque des revendications 1 à 6, **caractérisé en ce que** lors du liaison de la couche supérieure (1) et de la couche de support (2), la couche intermédiaire (3) est insérée ou enfoncée partiellement dans la couche de support (2) ou **en ce que** la couche supérieure (1) est reliée à la couche de support (2) par une couche adhésive ou **en ce que** la couche supérieure (1) possède des caractéristiques d'adhérence et est appliquée sur la couche de support (2) et est reliée à celle-ci.

8. Procédé selon l'une quelconque des revendications 1 à 7, **caractérisé en ce que** les évidements (6) sont réalisés en section transversale sous forme circulaire, elliptique, en forme de bâtonnets ou en forme d'étoile.

9. Procédé selon l'une quelconque des revendications 1 à 8, **caractérisé en ce que** les évidements (6) sont formés dans la surface de la couche supérieure (1) avec une plus grande dimension de 40 µm à 2,0 mm, de préférence 80 µm à 0,90 mm.

10. Procédé selon l'une quelconque des revendications 1 à 9, **caractérisé en ce que** par unité de surface (8), par exemple par cm², au maximum 35 %, de préférence au maximum 28 %, de l'unité de surface (8) sont pourvus d'évidements (6).

11. Procédé selon l'une quelconque des revendications 1 à 10, **caractérisé en ce que** le choix et les dimensions des évidements (6) sont calculés de telle façon que la perméabilité à la vapeur d'eau du matériau composite (7) selon la norme DIN EN ISO 14268 est supérieure à 1,2 mg/cm²h.

12. Procédé selon l'une quelconque des revendications 1 à 11, **caractérisé en ce que** la couche de support (2) est reliée avec une couche de base (4) apportant du volume, par exemple une couche de feutre.

13. Procédé selon l'une quelconque des revendications 1 à 12, **caractérisé en ce que** le composite de couche supérieure (1) et de couche de support (2) est préparé ou formé sous forme de bandes ou de plaques et **en ce qu'**après que les bandes ou les plaques ont été divisées en découpes au format ou en découpes de forme et de dimension souhaitées, les évidements (6) sont formés par un traitement au laser dans les découpes de matériau composite.

14. Matériau composite comprenant une couche de support (2), qui est reliée à une couche supérieure (1) composée de polyuréthane ou de PVC souple, la couche de support (2) étant un matériau textile, par exemple un tissu, une étoffe ou un non-tissé de microfibres, ou un cuir, en particulier un cuir bovin refendu, et la couche supérieure (1) comprenant un certain nombre de couches (1', 1") de PVC souple ou de polyuréthane reliées entre elles, en particulier préparé selon un procédé des revendications 1 à 13,
- dans le matériau composite (7), des évidements (6) en forme de canaux étant préparés ou étant formés avec un laser, en partant de la surface de la couche supérieure (1), pour la pénétration de vapeur d'eau et/ou d'air, et
- au moins une partie des évidements (6) pénétrant le matériau de la couche supérieure (1) et/ou s'arrêtant avant l'entrée dans la zone de volume, exempte de matériau de la couche supérieure (1), de la couche de support (2), **caractérisé en ce que** des couches (1', 1") juxtaposées ou successives de PVC souple ou des couches (1', 1") de polyuréthane de la couche supérieure (1), lors de la formation des évidements (6), sont reliées ou soudées entre elles dans la zone périphérique (9) des évidements (6) .

15. Matériau composite selon la revendication 14, **caractérisé en ce qu'**au moins 50 % des évidements (6) formés pénètrent la couche supérieure (1) et arrivent au moins jusqu'à la couche de support (2) .

16. Matériau composite selon l'une quelconque des revendications 14 et 15, **caractérisé en ce que** l'épaisseur du matériau composite (7) est de 1,0 à 1,4 mm et/ou **en ce que** la couche supérieure (1) et la couche intermédiaire (3) ensemble possèdent une épaisseur de 0,080 à 0,950 mm, de préférence une épaisseur totale de 0,010 à 0,750 mm.

17. Matériau composite selon l'une quelconque des revendications 14 à 16, **caractérisé en ce que**
- la couche située à l'extérieur (1') de la couche supérieure (1) est compacte et est au moins une couche de PVC souple et **en ce que** la couche située à l'intérieur (1") de la couche supérieure (1) est au moins une couche de PVC souple expansé ou
- **en ce que** la couche située à l'extérieur (1') de la couche supérieure (1) est compacte et est au moins une couche de polyuréthane, en particulier une couche d'une dispersion de polyuréthane réticulé et consolidé, et **en ce que** la couche située à l'intérieur (1") de la couche supérieure (1) est au moins une couche de polyuréthane expansé.

18. Matériau composite selon l'une quelconque des revendications 14 à 17, **caractérisé en ce qu'**une couche intermédiaire (3) composée de PVC souple éventuellement expansé ou de polyuréthane éventuellement expansé est disposée entre la couche supérieure (1) et la couche de support (2).

19. Matériau composite selon l'une quelconque des revendications 14 à 18, **caractérisé en ce que** la couche intermédiaire (3) est insérée partiellement dans la couche de support (2) ou **en ce que** la couche supérieure (1) est reliée à la couche de support (2) par une couche d'adhésif ou **en ce que** la couche supérieure (1) possède des caractéristiques d'adhérence et est appliquée sur la couche de support (2) et est reliée à celle-ci.

20. Matériau composite selon l'une quelconque des revendications 14 à 19, **caractérisé en ce que** la couche supérieure (1) et/ou la couche intermédiaire (3) et/ou les couches (1', 1") de la couche supérieure (1) contiennent éventuellement des pigments de couleur de différentes couleurs.

21. Matériau composite selon l'une quelconque des revendications 14 à 20, **caractérisé en ce que** les évidements (6, 6') sont, en section transversale, circulaires, elliptiques, en forme de bâtonnets ou en forme d'étoile.

22. Matériau composite selon l'une quelconque des revendications 14 à 21, **caractérisé en ce que** la plus grande dimension des évidements (6, 6') dans la surface de la couche supérieure (1) est de 40 µm à 2,0 mm, de préférence 80 µm à 0,90 mm.

23. Matériau composite selon l'une quelconque des revendications 14 à 22, **caractérisé en ce que** par unité de surface (8), par exemple par cm², au maximum 35 %, de préférence 28 %, de la surface de cette unité de surface (8) sont occupés par des évidements (6).

24. Matériau composite selon l'une quelconque des revendications 14 à 23, **caractérisé en ce que** la perméabilité à la vapeur d'eau du matériau composite (7) selon la norme DIN EN ISO 14268 est supérieure à 1,2 mg/cm²h.

25. Matériau composite selon l'une quelconque des revendication 14 à 24, **caractérisé en ce que** la couche de support (2) est reliée avec une couche de base (4) apportant du volume, par exemple une couche de feutre.

26. Matériau composite selon l'une quelconque des revendications 14 à 25, **caractérisé en ce que** le matériau composite (7) est présent sous forme d'une découpe au format respectivement est découpé ou divisé.

27. Objets au moins partiellement fabriqués avec une découpe au format composée de matériau composite selon l'une quelconque des revendications 14 à 26, en particulier des housses ou des rembourrages de siège de voiture, des appuis-tête de voiture, des chaussures et des surfaces de couchage.

28. Découpe au format, fabriquée à partir d'un matériau composite selon l'une quelconque des revendications 14 à 26.
